# EUROPEAN PATENT SPECIFICATION

(11) **EP 0 513 246 B1**
(45) Date of publication and mention of the grant of the patent: **02.11.1994**
(21) Application number: 91907305.6
(22) Date of filing: 08.03.1991
(51) Int. Cl.: H01H 85/04, H01H 69/02, H01G 1/11

(54) **ELECTRICAL COMPONENT (FUSE) AND METHOD OF MAKING IT**
ELEKTRISCHES BAUTEIL (SICHERUNG) UND DESSEN HERSTELLUNGSVERFAHREN
ELEMENT ELECTRIQUE (FUSIBLE) ET METHODE DE FABRICATION DE CELUI-CI

(30) Priority: 13.03.1990 US 492631; 04.04.1990 US 504678; 24.05.1990 US 528161
(43) Date of publication of application: 19.11.1992
(73) Proprietor: MORRILL GLASSTEK, INC., Maryland Heights Missouri 63043 (US)
(72) Inventor: MORRILL, Vaughan, Jr., Creve Coeur, MO 63141 (US)
(74) Representative: Waxweiler, Jean
(86) International application number: US9101576
(87) International publication number: WO9114279

## Description

### ELECTRICAL COMPONENT (FUSE) AND METHOD OF MAKING IT

### Technical Field

This invention relates to electrical components and methods of making them. It has particular application to a sub-miniature fuse for electronic components and most particularly for surface mount devices where small size, low energy actuation, low resistance, high frequency signal handling, and high open resistance are desired. As used herein, the term "sub-miniature" indicates a component less than 0.3 cm (0.1˝) on a side in at least two dimensions. The invention will be described in connection with such fuses, but the utility of some aspects of the invention is not limited thereto.

### Background of the Invention

In some of its aspects, the present invention is a modification of the structures and processes described in commonly owned U.S. Patent 4,749,980, the disclosure of which is hereby incorporated by reference.

With the advent of surface mount technology, burning and charring of surface mount boards by runaway components has become much more prevalent. The closer proximity of components, as found on surface mount boards, contributes to this problem along with thinner dielectric materials required to reduce component size. In addition, the area available to conduct away or radiate energy during normal operation or catastrophic failure is reduced.

Large, high component density, surface mount boards may cost thousands of dollars in today's market so that the protection offered by fused components can result in an extreme cost savings over the life of the board or the equipment incorporating such a board. The complete destruction by fire of the equipment or structure in which these components are housed is also prevented by proper fusing at the surface mount board level.

Surface mount monolithic ceramic capacitors, electrolytic (e.g., tantalum) capacitors and power transistors are typical of some of the components that can produce board burning and charring during failure.

A fuse to protect these and similar components from generating destructive temperatures on surface mount boards must be small enough to be incorporated within the housing of the component or externally attachable to the housing so that no additional board real estate or change in component footprint is required.

The fuse must have extreme reliability to be effective and must not be subject to loss in reliability due to complicated and variable manufacturing procedures.

Such a fuse must have the lowest possible impedance, even when operating at high frequencies of 100 MHz or more, so that losses in the fused component are reduced to an absolute minimum.

The fuse must carry a significant current without serious overall increases in impedance to the series-connected component, yet open rapidly with a small increase in current before the component approaches its critical failure temperature. For example, one specification for a fuse for a tantalum capacitor requires that the fuse carry 0.75 amperes D.C. for five seconds but must blow within five seconds on application of 1.4 amperes D.C.

The open fuse must have a very high resistance so that minute residual currents can not flow through the protected component over long periods of time. In the case of tantalum capacitors even the continuous flow of a few microamps can reestablish high temperatures in the failed component, so that a resistance on the order of ten megohms may be required in the open fuse.

Finally, the fuse must be able to be manufactured economically and reliably using high volume techniques such as those found in the semiconductor industry.

U.S. Patent Nos. 4,107,759 (Shirn et al), 4,107,762 (Shirn et al), and 4,193,106 (Coleman) are among the earlier patents that discuss the problems of fuse protection for capacitors. These patents use exothermic wire fuses buried in molded plastic housings in thermal contact with the capacitor. They have proven to be an unreliable solution because of serious thermal variables that can prevent actual exothermic action due to chilling of the wire link. If the exothermic wire does not ignite, the fuse may carry enough current to ignite the tantalum capacitor.

U.S. Patent No. 4,224,656 (DeMatos et al) is similar to the foregoing patents, but shows a method for isolating the exothermic wire in space to overcome the erratic behavior of exothermic wire molded in plastic

In US-A-4 749 980, there is described an electrical component and a method of making it according to the preamble of claims 1 and 19.

U.S. Patent No. 4,814,946 (Su) discloses that exothermic wire is used for protecting capacitors because the reliability of low melting temperature metals as a fusible link in a capacitor assembly is very poor. Su therefore uses a bimetallic exothermic wire, made of aluminum wire, with a ruthenium or palladium cladding, and covered with a silicone adhesive composition. This wire ignites at a temperature of around 650°C. and reaches a maximum temperature during its reaction of about 3000°C.

All of these patents suffer from high manufacturing costs due to difficulties in handling tiny wire, high impedance at high frequencies, and difficulties with termination of the wire to the outside of the package.

The necessary small diameter fuse wire, on the order of 0.0025 cm (one mil), is extremely hard to fabricate into a surface mount package and causes relatively high manufacturing cost because manufacture is not tractable to mass production methods such as found in the semiconductor industry.

The small surface area of small diameter wires impedes high frequency signals which flow only on the surface of a conductor, thereby increasing the high frequency impedance of the fused component. In addition, small diameter wires show significant inductance. The effective series resistance (ESR) of the fuse is therefore generally objectionably high when used in high frequency applications.

The extreme small diameter of the exothermic wire is necessary to bring a short length of it to the exothermic reaction temperature and requires that the fuse have a relatively high D.C. resistance, thereby adding to the overall impedance of the fuse component combination. I have found that making the link element flat, or placing it in contact with a heat sink, prevents reproducible ignition of the fuse link under the desired overcurrent conditions.

U.S. Patent No. 4,757,423 (Franklin) forms a fused tantalum capacitor in another way. This patent utilizes as the fuse link, a pad of spherical polystyrene particles coated with about 1% by weight of a metal and molded at high temperature and pressure into plaques, in which the metallic shell continuity is preserved in a continuous polystyrene matrix formed from the coated particles during the molding operation. This approach eliminates the tiny wire problem in a tantalum capacitor fuse, but it introduces new variables that are difficult to control. The overall D.C. resistance and current carrying characteristics of the fuse are so sensitive to the polymer and metal phase ratio in the matrix along with the need for precise control of internal and external geometries that a practical fuse to protect a tantalum capacitor becomes extremely difficult to manufacture. Moreover, the polystyrene particles are easily damaged at temperatures encountered in surface-mount techniques.

U.S. Patent 4,749,980 (Morrill et al) discloses a fuse whose link has a large surface area, hence a low D.C. resistance and ESR, but the fuse shows too high a residual resistance for use in an electrolytic capacitor and is difficult to make small enough to be used without enlarging the footprint of, for instance, a standard "D" sized capacitor package.

### Summary of the Invention

One of the objects of this invention is to provide a high-volume, low-cost method for forming electrical components.

Another object is to provide an electrical component of extremely small dimensions, which may be made inexpensively, reliably, reproducibly, automatically, and in large quantities.

Another object of this invention is to provide such a component which may easily be tested during the manufacturing process.

Another object of this invention is to provide such a component which is easily handled and mounted in or on a standard package of another, surface mounted, component.

Another object of this invention is to provide a fuse of the foregoing type.

Another object of this invention is to provide such a fuse which has extremely low D.C. resistance and ESR in normal operation, and which has extremely high residual resistance when the fuse opens.

Another object of this invention is to provide such a fuse which may be accurately and simply controlled and modified in its electrical and mechanical characteristics.

Another object is to provide such a fuse which is protected from ambient, whether ambient is atmosphere or a plastic casing.

To achieve this, the electrical component of the invention is characterized by the features of the characterizing part of claim 1 and the method of the invention by the features of claim 19.

Other objects of this invention will be apparent to those skilled in the art in light of the following description and accompanying drawings.

In accordance with one aspect of this invention, generally stated, electrical components are formed by metallizing at least one electrical conductor on the outer surface of a dielectric tube, bonding a curable dielectric jacket to the tube and conductor to protect the conductor, and cutting the tube and jacket into electrical components. Preferably, the jacket is formed by sleeving the metallized glass tube into a sleeve, filling the space between the tube and the sleeve with a curable material, curing the material to bond it to the tube, and cutting at least the tube and the curable material into a plurality of components. Preferably, the cutting step includes cutting the tube, the curable material, and the sleeve.

Preferably, and in accordance with another aspect of the invention, a plurality of assemblies are mounted generally parallel in a fixture, and the space between the assemblies is also filled with the curable material. After the material is cured to form a monolith, it is cut into plates with the individual components held together by the curable material.

Terminals are applied to the individual components while they are held together by the curable material. Preferably, the terminals include a metallized layer applied to an entire broad face of the plate.

In accordance with another aspect of the invention, the components in the plate are initially connected mechanically and electrically. The components are held individually between electrodes, the binding material is stripped from between the components while they are held by the electrodes, and the components are tested before being released.

In the preferred method-of the invention, a plurality of square tubes are masked and metallized by vacuum sputtering, the tubes are sleeved, a bundle of sleeved tubes is held in a fixture, the fixture is filled with an RTV silicone elastomeric adhesive and centrifuged to ensure that all air is removed, the silicone is cured, the bundle is cut normal to the axes of the tubes into thin plates, the silicone is etched back to expose a small part of the metallization on the tubes, the plates are metallized by sputtering, individual sleeved components on the plate are supported between two arrays of electrodes, the components are mechanically and electrically separated from each other, the components are electrically tested while being held by the electrodes, and the components are individually released from the electrodes and placed according to how they tested.

The solid filler is preferably a material which fills the space between the tube and the sleeve, as well as the interior of the tube when it is hollow, without leaving any substantial voids. Preferably, it leaves no passages larger than a few microns, and in any event it leaves no passages large enough to provide a metallized path axially through the device during metallization of the ends of the device. A preferred filler is an adhesive material or an elastomeric material, most preferably a material which is both. A particularly useful such material is a silicone elastomer, preferably a two-part, room temperature vulcanizing (RTV) silicone elastomer. The silicone, when cured, clings to the tube and provides a good environmental seal.

The filler is preferably etched back, mechanically or chemically, to expose a short portion of the conductor on the tube, and a contact is applied to the end of the tube, extending across the exposed conductor. Preferably, the contact includes a metallized layer applied across the entire end of the assembly, including the tube, the sleeve and the filler. More generally, the etching back of a filler applied between a cover and a metallized substrate, in order to expose the metallization on the substrate, constitutes another aspect of the invention.

In one embodiment of the invention, the finished components include the sleeve for protection. In that embodiment, the filler bonds the tube to the sleeve. Preferably, the tube is hollow and square. The preferred tube fits snugly within the sleeve. The electrical conductor is metallized, preferably by sputtering, as in the Morrill et al U.S. Patent 4,749,980, on one or more of its flat faces. The tube and the sleeve are preferably both formed of high temperature glass. Because the volume between the tube and the sleeve is filled with an elastomer, the spacing between the tube and sleeve is less critical than in Morrill et al, U.S. Patent 4,749,980.

In another embodiment, the interior of the sleeve is pre-treated to reduce bonding between the sleeve and the filler, and the sleeve is removed along with the matrix of curable material, leaving the metallized tube surrounded by a jacket of curable material which forms a sleeve over the tube. In this embodiment, the jacket of curable material is preferably a circular cylinder over a square tube, with the thickest portion of the cylinder overlying a metal conductor on the tube. In this embodiment, it is also preferred that the tube be a solid rod.

In accordance with another aspect of the invention, the component is a sub-miniature component having a diameter less than 0.3 cm (0.1˝) and having a thickness substantially less than its diameter. In the first embodiment, a filler in the annular space between the tube and sleeve provides a barrier between the ends of the tube. The second embodiment may be even smaller in diameter than the first, and the cured jacket provides a barrier above the electrical conductor on the tube.

In accordance with another aspect of the invention, the component includes a tube, a conductor metallized to an axial face of the tube, a dielectric jacket bonded to the tube and covering a portion of the conductor, the jacket terminating short of at least one end of the tube to expose an end of the conductor adjacent the end of the tube, and metallization covering at least one end of the tube and the exposed conductor. Preferably, the metallization also covers the axial end of the jacket.

In accordance with another aspect of the invention, the component includes a metallized hollow tube and a sleeve, and a dielectric filler filling both the annular space between the tube and sleeve and the inside of the hollow tube.

In accordance with another aspect of the invention, the electrical component is a fuse, and the fuse may be utilized in or on a surface mounted component. The conductor may be made of a metal which reacts with the filler at elevated temperature to provide a chemically augmented fuse. Examples of suitable metals for the link are aluminum and aluminum covered with antimony pentoxide. The size and geometry of the link are easily controlled by masking the flat side of the square tube. Conductors may be sputtered onto more than one side of the square tube, and the link portion of the conductor may be made different in geometry or composition on each side. If desired, other components may be sputtered onto one or more sides of the tube.

In accordance with another aspect of the invention, a method of forming fuses is provided including metallizing a substrate to form a plurality of conductors on the substrate, each conductor including a fusible link, covering the fusible links with a synthetic polymer adhesive which adheres to the links and the substrate around the links, and severing the substrate and conductors to form a plurality of fuses. Preferably, the fuse link is made of aluminum or an aluminum alloy metallized on a glass substrate. The link is preferably covered with an elastomeric silicone polymer adhesive which reacts with the aluminum under overcurrent conditions. The substrate may, for example, be the tube of the preferred embodiment, or it may be a thin glass sheet which is severed by the dicing techniques used in severing semiconductors. When a thin glass sheet is the substrate, it is preferred to leave a small gap between fuses on the substrate, rather than depositing a continuous conductor, to prevent peeling or tearing of the conductor during the cracking operation. Such a fuse may be made very inexpensively, but it produces a fuse which has both contacts on a single face of the substrate, thereby making connection of the fuse into a circuit more complex than with the tubular fuse having contacts at its opposed axial ends.

The combination of an aluminum fuse link covered with a silicone elastomer is another aspect of the invention. The combination is particularly effective when the aluminum link is deposited on a dielectric glass substrate, and the silicone is an adhesive which adheres both to the substrate and to the link.

In the preferred embodiment, the fuse body is less than 0.25 cm (0.10˝) in diameter and less than 0.13 cm (0.05˝) in length. The ends of the fuse are metallized, and are optionally soldered to provide contacts at the axial ends of the fuse body. The present fuse is much shorter than the fuse illustrated in prior U.S. Patent No. 4,749,980. If the space between the tube and the sleeve were not filled with a solid filler, the process of metallizing the axial ends of the fuse could create a bridge of material extending axially through the fuse independent of the fuse link. The danger of this occurring is greatly increased by the use of a square tube, which leaves a larger gap between its flat sides and the sleeve, rather than a round tube. The use of an elastomeric or adhesive filler has the further advantage that it eliminates the need for waxing the tube and the sleeve together for cutting them. There is also no wax to be removed, and handling the cut pieces is simplified and made easy to automate.

The use of a square tube, rather than round, makes masking the tube during the metallizing operation much easier and more precise. It also simplifies the metallization of plural conductors running axially of the tube, spaced 90° or 180° circumferentially apart.

Using a single conductor having a 0.025 cm (0.010˝) square link, the fuse of the present invention may have an impedance of 0.1 +/- 0.05 ohms over a full range of frequencies from below 0.1 megahertz to over 200 megahertz. A fuse with a somewhat thinner link of the same size has an impedance of under 0.2 ohms, carries 0.75 amps for five seconds, but opens within five seconds when carrying 1.4 amps. When the fuse opens, it exhibits a resistance in excess of 10 megohms, with no tendency to reconnect with time.

The extremely small size of the fuse, its symmetry, and the fact that it is so rugged that it may be handled by conventional automated pick-and-place equipment enable the fuse to be placed within a component package, under the component package, or separately surface mounted with minimal effort.

Other aspects of the invention will become more apparent in light of the following description.

### Brief Description of the Drawings

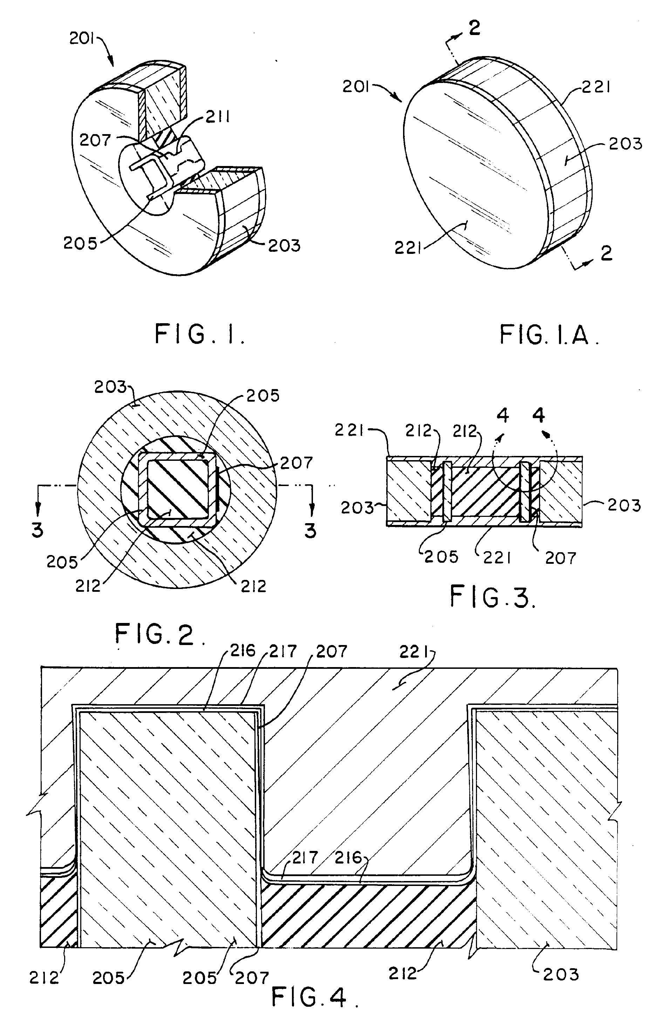

In the drawings, Figure 1 is a view in perspective of a fuse of the present invention, partially broken away to show the interior construction.

Figure 1A is a view in perspective of the fuse of Figure 1.

Figure 2 is a sectional view taken along the line 2-2 of Figure 1.

Figure 3 is a sectional view taken along the line 3-3 of Figure 2.

Figure 4 is an enlarged view in cross section taken along the line 4-4 of Figure 3.

Figure 5 is a plan view of a mask used for sputtering conductors onto square tubing in the manufacture of the fuse of Figures 1-4.

Figure 6 is a view in perspective of a portion of the square metallized tubing, inserted in an outer tube or sleeve in the production of the fuse of the present invention.

Figure 7 is a view in elevation, partially diagrammatic and partially cut away, of a bundle of sleeved tubes of Figure 6, being inserted into a closed-end cylinder for filling with an elastomer.

Figure 8 is a view in plan of a disk or plate of fuse blanks cut from the bundle of Figure 7.

Figure 9 is a sectional view, taken along the line 9-9 of Figure 8.

Figure 10 is a sectional view, corresponding to Figure 9, during a further step in the processing of the plate of fuse blanks, showing the elastomer etched back.

Figure 11 is a somewhat diagrammatic view of the plate of Figures 8-10, after further metallizing steps, held between electrodes of a stripping and testing device.

Figure 12 is a view in side elevation of the assembled fuse of Figures 1-4, assembled under an electrical component.

Figure 13 is a view in partial cross-section of the assembled fuse of Figures 1-4, assembled in a package with an electrolytic capacitor.

Figure 14 is a view in partial cross-section of the assembled fuse of Figures 1-4, assembled in a stand-alone surface-mount package.

Figure 15 is a view in perspective corresponding to Fig 6, of another embodiment of the invention, utilizing tubing having conductors metallized on more than one face.

Figure 16 is a sectional view, corresponding to Figure 2, of another embodiment of the invention, in which an outer sleeve portion has been removed.

Figure 17 is a sectional view, corresponding to Figure 3, of the fuse of Figure 16.

Figure 18 is a view in perspective, corresponding to Figure 6, showing a step in the manufacture of the fuse of Figures 16 and 17.

Figure 19 is a view in perspective of a fuse made in accordance with another embodiment of the invention.

Figure 20 is a view in side elevation of the fuse of Figure 19.

Figure 21 is a view in perspective of the fuse of Figures 19 and 20 with terminals attached to it.

Figure 22 is a top plan view of a portion of a sheet of fuses, showing steps in the manufacture of the fuse of Figures 19-21.

Figure 23 is a view in perspective of a fuse made in accordance with another embodiment of the invention.

Figure 24 is a view in side elevation of the fuse of Figure 23.

Figure 25 is a top plan view of a portion of a sheet of fuses, showing steps in the manufacture of the fuse of Figures 23 and 24.

Figure 26 is a view in perspective of the fuse of Figures 23 and 24 with terminals attached to it.

### Description of the Preferred Embodiments

Referring now to the drawings, and in particular to Figures 1-4, reference numeral 201 indicates one illustrative embodiment of electrical device of the present invention, particularly a sub-miniature fuse. The fuse 201 includes a dielectric sleeve 203 surrounding a square tube 205. The sleeve 203 and square tube 205 are both formed from high temperature KG-33 borosilicate glass having a softening point above 700°C. The sleeve 203 has an outer diameter of 0.23 cm (0.090˝), a wall thickness of 0.051 cm (0.020˝), an inner diameter of 0.13 cm (0.050˝), and a length of 0.076 cm (0.030˝). The square tube 205 has an outer diagonal diameter of 0.12 cm (0.049˝), an outer face-to-face width of 0.10 cm (0.040˝), a wall thickness of 0.01 cm (0.004˝), and a length of 0.076 cm (0.030˝). The square tube 205 has rounded corners characteristic of the redraw techniques by which it is made.

The square tube 205 has an aluminum film conductor 207 applied to one of its outer faces. The conductor 207 extends axially from end to end of the tube 205. At its center, the conductor 207 is necked down to form a fuse link 211. The link 211 is 0.025 cm (0.010˝) across and 0.025 cm (0.010˝) long. The conductor 207 is two microns thick. The conductor 207 is applied by masking and vacuum sputtering as described hereinafter. The dimensions and the composition of the conductor 207 and its link 211 are chosen to provide a fuse suitable for use with a high frequency electrolytic capacitor, for which a fuse is required which will carry 0.75 amps but which will open completely and quickly when carrying an overload current of less than two amps.

The space between the sleeve 203 and square tube 205 is completely filled with a dielectric elastomer 212 as is the interior of the square tube 205. The elastomer 212 terminates 0.008 cm (0.003˝) from the axial ends of sleeve 203 and square tube 205. The elastomer 212 is illustratively a high durometer silicone polymer. A suitable polymer is sold by Dow Corning Corporation under the name Sylgard Q3-6605 thermally conductive elastomer. The cured Q3-6605 elastomer 212 has a Shore A hardness of 80, is stable against reversion, has excellent dielectric properties, and is thermally stable above 200°C.

Each axial end of the fuse 201 is completely covered with a 1.5-micron thick layer 216 of a nickel/vanadium alloy. The nickel/vanadium is a 7% vanadium alloy. The nickel/vanadium layer is intimately bonded to the 0.008 cm (0.003˝) exposed end of the conductor 207, as well as to the axial ends of the sleeve 203, the elastomer 212, and the square tube 205. The nickel/vanadium alloy is in turn covered by a 3-micron thick layer 217 of silver. An electrical contact 221 is applied to each axial end of the fuse 201. The axial contact 221 may be formed of solder or a conductive epoxy. It is preferably about 0.003 cm (0.001˝) thick. A suitable epoxy is a commercially available silver-filled epoxy. A suitable solder is a high temperature solder, for example a commercially available solder made of 95% lead and 5% tin, having a solidus point of 310°C and a liquidus point of 314°C. In some applications, the metallized layer may itself form the contact.

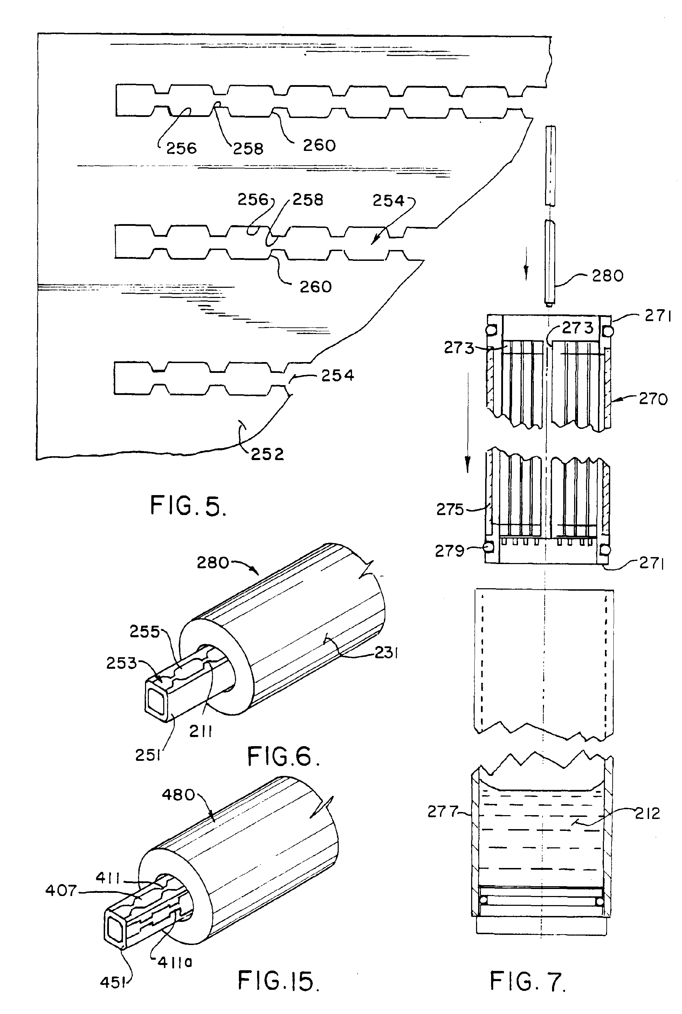

Referring now to Figures 5-11, in an illustrative process of making the fuse 201, sixty-one pieces of high precision KG-33 borosilicate glass tubing 251 are sputtered in a single operation. The lengths of tubing 251 are commercially available square tubing formed by a conventional vacuum redraw process, to give the tubing the cross-sectional shape and dimensions previously described for the inner tube 205. Each length of tubing 251 is 15 cm (6˝) long.

The tubing 251 is cleaned and placed in a vacuum sputtering machine using a fill of argon gas at a pressure of about 20 millitorrs with a mechanical mask 252 (Figure 5) covering all of the tubing 251 except the portions desired to be metallized. The mask 252 includes openings 254 extending axially over each length of tubing 251. Each axial opening 254 includes a series of wide portions 256 connected by restrictions 258. Chamfers 260 at each end of each wide portion 256 provide a smoothing of the transition between the wide portion 256 and the restriction 258. The wide portions 256 are 0.061 cm (0.024˝) wide, and the restrictions 258 are 0.025 cm (0.010˝) wide. Each restriction 258 is 0.025 cm (0.010˝) long, and each wide portion 256 is 0.097 cm (0.038˝) long. Therefore, the repeat length of the wide portions and restrictions is 0.12 cm (0.048˝), and over one hundred twenty repeats may be provided on each tubing length 251. The linear openings 254 are parallel with each other and are spaced 0.25 cm (0.100˝) on centers. Therefore, all sixty-one tubing lengths 251 may be mounted in a fixture which is about 16.5 cm (6.5˝) square.

In accordance with known procedures, a radio frequency sputter etching step is carried out, to remove a few molecules of glass from the surface to be metallized. The masked glass is then exposed to an aluminum target by DC magnetron sputtering for a sufficient time to permit two microns of aluminum to be drawn from the target and deposited on one face of the tubing 251 through the mechanical mask 252. The sputtering process provides a tightly bonded electrical conductor 253 on one flat face of each tubing length 251, running axially of the tubing 251. Each conductor 253 includes wide portions 255 of the same dimensions as the wide portions 256 of the mask 252 and fuse link portions 211 corresponding to the restrictions 258 in the mask 252.

The metallized tubes 251 are removed from the sputtering machine and inserted into 15 cm (6˝) lengths of outer tubing 231, as shown in Figure 6 to form assemblies 280. The lengths of outer tubing 231, as shown in Figure 6, are formed of the same borosilicate glass as the inner tubing 251 and have an outer diameter of 0.223 cm (0.090˝) and an inner bore diameter of 0.13 cm (0.050˝).

The sixty-one sleeved tubing assemblies 280 are placed in a carrier fixture 270 as shown in Figure 7. The fixture 270 has upper and lower caps 271 and a circumferential glass cylinder 275. The caps 271 include counter-bored axial openings 273 through them. The openings 273 position the tube assemblies 280 parallel with each other and spaced 0.025 cm (0.010˝) from each other. The length of the glass cylinder 275 and the diameters and depths of the openings 273 are chosen to permit fluid to flow into and around the tube assemblies 280 from the axial ends of the fixture 271. The glass cylinder 275 has an inner diameter of about 2.44 cm (0.960˝).

A cup-shaped vessel 277 is partially filled with a pourable, curable elastomer 212. The illustrative Dow Corning Sylgard Q3-6605 elastomer is a two-part liquid silicone elastomer which may be cured at room temperature (RTV) or elevated temperature to form a relatively hard elastomer which supports the sleeved tubing lengths during cutting and which prevents formation of electrical bridges during subsequent sputtering steps and soldering or gluing steps. The two liquid parts of the elastomer system are thoroughly mixed and deaired under vacuum in accordance with the manufacturer's instructions, and the mixture is poured into the vessel 277. The loaded fixture 270 is then forced into the vessel 277. O-rings 279 on the caps 271 prevent the elastomer from extending into the space between the glass cylinder 273 and the side wall of the vessel 277. Forcing the fixture 270 into the vessel 277 causes the liquid elastomer to fill all of the spaces in the cylinder 275, including the inside of the tubing lengths 251, the space between the tubing lengths 231 and 251, and the spaces between outer tubing lengths 231. The vessel 277, carrying the fixture 270, is then centrifuged at two thousand RPM on a 56 cm (22˝) diameter rotor to remove all air and leave a nonporous elastomeric adhesive filling the fixture 270. The elastomer is then cured at 100°C for 60 minutes to firmly adhere it to the tubing lengths 231 and 251 and to the conductors 253.

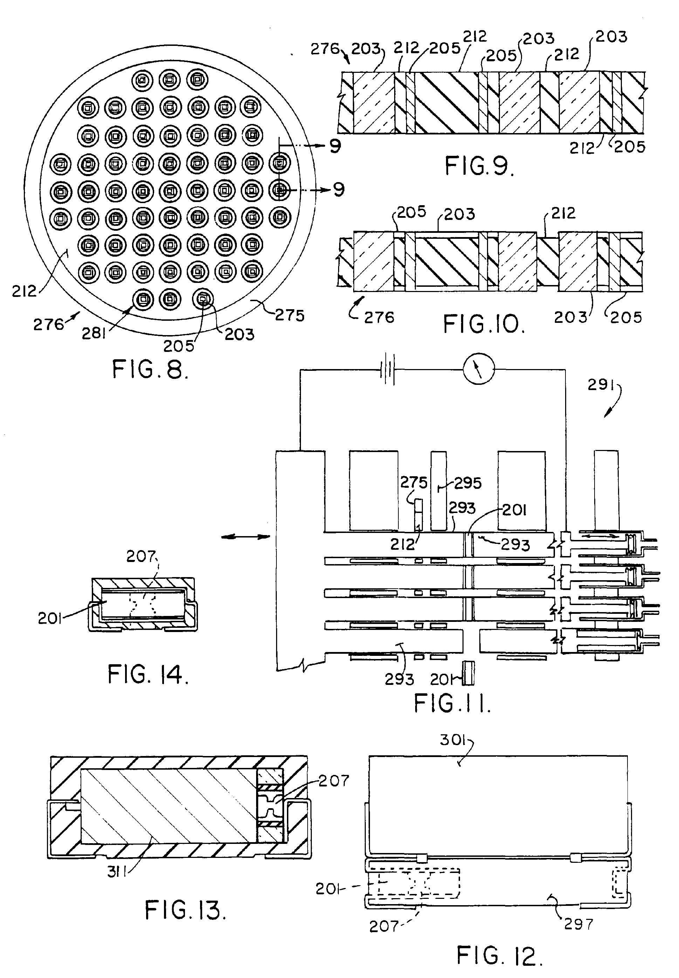

After the elastomer 212 has cured, the cylindrical bundle of tubing assemblies 280 in the fixture 270 is removed from the vessel 277 and is cut with a diamond saw into one hundred twenty discs 276, each having a thickness of 0.076 cm (0.030˝), as shown in Figures 8 and 9. The cuts are made through the center of each wide portion 255 of the conductors 253, with a kerf of 0.046 cm (0.018˝). Suitable saws are a diamond saw, a wire saw, or a slurry saw, preferably with multiple blades to make all the cuts through the cylindrical bundle simultaneously. Each disc contains sixty-one fuse blanks 281 consisting of a metallized square tube 205 cut from the tubing 251 sleeved within a sleeve 203 cut from the outer tubing 231, and bonded to the sleeve 203 by the elastomer 212.

The discs 276 are cleaned, and a small amount of the silicone elastomer 212 is etched back from each face of the disc, as shown in Fig 10. Preferably the elastomer is etched chemically by known means, such as with methylene chloride or a mixture of methylene chloride and benzenesulfonic acid containing predominantly methylene chloride. A suitable methylene chloride etchant is sold commercially by Dynaloy, Inc., Hanover, N.J., under the name Dynasolve 210. The etchant dissolves and removes about 0.008 cm (0.003˝) of silicone elastomer from each face of the disc, without appreciably softening the underlying silicone mass. In particular, the etchant exposes about 0.008 cm (0.003˝) at each end of each tube 205 of the wide portion 255 of the conductor 207.

Alternatively, the elastomer may be etched back mechanically from the ends of the conductor 207, either by cutting or by vacuum plasma etching, for example.

The discs 276 are then placed in the vacuum sputtering machine for two-sided DC magnetron sputtering, to place a metallic layer over both faces of the disc simultaneously. First, the nickel vanadium layer 216 is sputtered onto each face, then the silver layer 217 is sputtered over it. Because the silicone elastomer 212 completely fills and seals the space between the tube 205 and the sleeve 203, as well as filling the inside of the tube 205 and the outside of each sleeve 203, no conductive path can be created during the sputtering process between the axial ends of the fuses 201. Because of the much shorter lengths of the fuses 201 than the lengths of the fuses of prior U.S. Patent 4,749,980, and because of the extremely high impedance path which they must offer when they open, the use of a sealant surrounding the tube and sleeve is important during this step to prevent residual conductivity when the fuse blows. It is believed that an opening between the faces of the disc 276 as small as several microns may be sufficient to permit the formation of a conductive path through the sealant.

The fact that the sealant 212 has been etched away from the axial face of the conductor 207 is also important in assuring good electrical conductivity between the conductor 207 and the metallic layers 216 and 217, even after extreme thermal cycling of the fuse 201. A contact made only with the thin axial end of the conductor 207 is likely to break during normal operation of the fuse because of thermal expansion of the parts, particularly the silicone elastomer. Failure of the fuse at a point other than the link 211 is undesirable not only for the inconvenience caused by disrupting the circuit, but also because the failure is liable to lead to a relatively low resistance path which can draw enough current to ignite the electrolytic capacitor it is supposed to protect.

The faces of the disc 276 are then preferably coated with a 0.003 cm (0.001˝) layer of a conductive material, such as a solder or a conductive epoxy, to form a more substantial contact on each face of the disc.

As shown in Fig 11, the discs 276 are then individually placed in a testing device 291 having sixty-one pairs of opposed electrodes 293 corresponding in diameter and position to the sixty-one fuses 201 in each disc. The fuses are trapped between the electrodes 293, and a stripping form 295, in the form of a perforated plate, is forced along the electrodes 293 to strip away the excess silicone elastomer 212 from between the fuses 201, together with the metallized coating on the excess elastomer 212. The fuses are thereupon isolated mechanically and electrically from each other, and are individually supported between pairs of electrodes 293. Each fuse is then tested by running a current through its electrodes and its electrical characteristics are noted electronically. The fuses 201 are then individually released into a reject pile if they do not meet electrical specifications, or onto a tape for transfer to a pick-and-place surface-mount machine if they do meet specifications.

The illustrative fuse described has an operating impedance of under 0.2 ohms over a full range of frequencies up to and exceeding two hundred megahertz, carries 0.75 amps for five seconds, but opens within five seconds when carrying 1.4 amps. When the fuse opens, it exhibits a resistance in excess of ten megohms, with no tendency to reconnect with time. When the fuse is exposed to overcurrent conditions, the link 211 appears to react chemically with the silicone elastomer, and forms a cavity within the elastomer 212 which acts to disperse any residual metal conductive particles resulting from the melting of the fuse link. The combined effects of these actions give the open fuse its high resistance after activation.

The fuse 201, when molded into a separate package 297, may be mounted under a surface-mount component such as an electrolytic tantalum capacitor 301, as shown in Figure 12. This mounting of the fuse 201 as a separate component does not generally raise the capacitor 301 too far above the surface of the surface mount board and therefore takes up no additional real estate on the board. Because the conductor 207 extends across the short dimension of the fuse 201, between the broad faces of the fuse 201, making electrical connection to the fuse is simplified.

As shown in Figure 13, the fuse 201 may also be formed within a standard "D" package of an electrolytic tantalum capacitor 311, without changing the length of the package. Mounted thus, the fuse 201 is invisible to the user. Again the round cylindrical shape of the fuse 201, and the fact that its terminals are constituted by its flat faces, make mounting the fuse particularly simple. By contrast, some prior art flat fuses require proper orientation and alignment of the fuse with respect to the component in order to make proper contact with the component.

As shown in Figure 14, the fuse 201 may also be mounted as a separate, stand-alone surface-mount component on a printed circuit board.

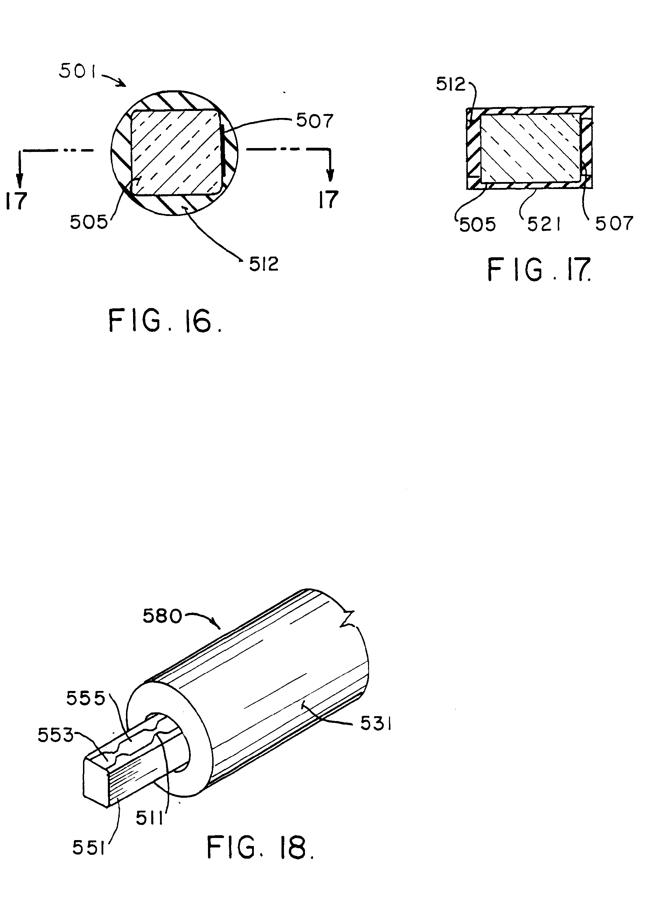

In Figure 15, the fuse assembly 480 differs from the assembly 280 of the first embodiment in that separate conductors 407 may be provided on each face of the square tube 451, each with a fuse link 411 and 411a, respectively, designed to carry a different amount of current. Thus, when the assembly 480 is cut into individual fuses, the links open sequentially in cascade when exposed to an overcurrent condition, but carry current with less ESR during normal operation.

A much smaller fuse 501 is shown in Figures 16-17. This fuse has the same thickness (0.08 cm or 0.03˝) as the fuse 201 of the first embodiment, but it has a diameter of 0.13 cm (0.05˝). It may therefore be incorporated in components having a smaller package size than a standard "D" size, for instance "C" and "B" sizes.

The fuse 501 is formed by modifying the method previously described. In this method, as shown in Figure 18, tubing 551, corresponding in composition and outer dimensions to tubing 251, is in the form of a solid rod. The tubing 551 is metallized in precisely the same manner as in the first embodiment to form a conductor 553 having links 511. Sleeving 531, identical with the sleeving 231, is pretreated by filling it with 1,1,1,3,3,3-hexamethyldisilazane, (CH₃)₃SiNHSi(CH₃)₃, for a short period of time, to reduce adhesion between the inside of the sleeving 531 and a silicone filler. The pretreated sleeving is then washed with ethanol, in accordance with known techniques, and dried. The metallized tubing lengths 551 are sleeved in the pretreated sleeving 531, and the assemblies are placed in the same fixture 270 as utilized in the first embodiment. In this embodiment, the preferred silicone 512 is a two-part liquid silicone elastomer sold by Dow Corning Corporation under the name Sylgard-577 elastomer. The cured Sylgard-577 elastomer 512 has a Shore A hardness of 60-65, is stable against reversion, has excellent dielectric properties, and is thermally stable above 200°C. It differs from the Sylgard Q-6605 elastomer of the first embodiment primarily in that it lacks the aluminum oxide loading and is thus less thermally conductive. A more complete description of this material is found in Schulz, U.S. Patent 4,087,585.

After the silicone elastomer has been cured, the assemblies 580 and their silicone support matrix are sawed into disks, the silicone is etched back, and both faces of the disks are metallized to form contacts 521, all in the same way as in the first embodiment. The metallized disks are placed in a separating and testing machine identical with the the machine 291, except that the diameters of the electrodes 293 are smaller, and the openings in the stripping form 295 are 0.13 cm (0.050˝) in diameter. Therefore, the segments of sleeving 531 are held in the silicone matrix, leaving only the metallized tubes 505 and the silicone elastomer 512, with their metallized ends 521, forming the fuses 501. The pretreatment of the sleeving 531 permits the silicone jacket 512 to be stripped cleanly from the sleeving segments. The silicone jacket 512, however, clings tenaciously to the tube 505 and its metallized conductor 507. Moreover, the jacket 512 is thickest over the center of each face of the tube 505, directly over the conductor 507 and particularly its link 511, which are centered on one face of the tube 505. Therefore, the jacket 512 provides protection for the link even when the fuse is handled by its axial face above the link 511. The jacket 512 also shields the link from any contact with the various plastic molding compounds used to package components for mounting on circuit boards. This shielding prevents any arcs that may form during or after overcurrent conditions, when the fuse link opens, from carbonizing the ambient plastic molding material and making a carbon trace conductive path. As in the first embodiment, the silicone sealant also appears to react with the link when it melts, and disperses its remnants sufficiently to provide over ten megohms residual resistance even after long periods.

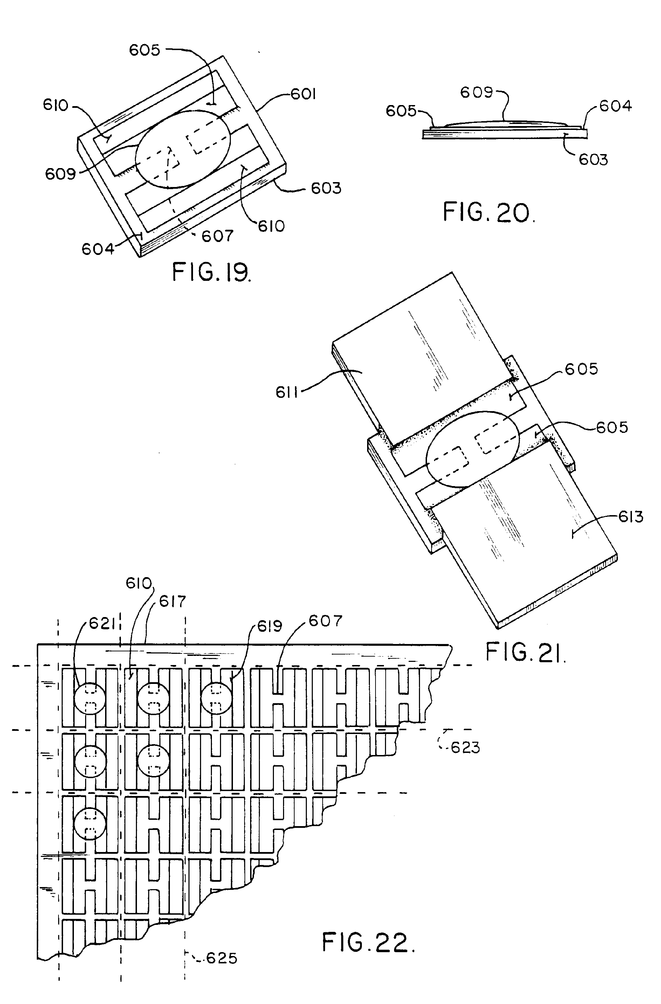

As shown in Figures 19-22, a fuse 601 having many of the virtues of the preferred fuses of Figures 1-18 may be formed by an even simpler process. The fuse 601 includes a substrate base 603 of flat sheet borosilicate glass. The substrate base 603 has a thickness of 0.013 cm (0.005˝), a width of 0.23 cm (0.090˝), and a length of 0.15 cm (0.060˝). On an upper face 604 of the substrate base 603 is a an aluminum conductor 605, having a necked-down link portion 607. The conductor 605 is metallized onto the substrate 603, and is covered at its ends by a layer of nickel-vanadium over which is a second layer of silver, which form a bonding surface 610. The link portion is a 0.025 cm by 0.025 cm (0.010˝ by 0.010˝) square. A spot 609 of synthetic polymer silicone adhesive completely covers the link portion 607 and extends beyond the link 607 to cover and adhere to portions of the conductor 605 and substrate base 603 adjacent the link 607. The adhesive 609 is illustratively Dow Corning Sylgard-577 elastomer silicone adhesive. The adhesive 609 has a thickness of approximately 0.008 cm (0.003˝). As shown in Figure 21, iron-nickel 42-alloy terminals 611 and 613 are attached to opposed ends of the conductor 605 with a silver-epoxy adhesive.

In the production of the fuse 601, a 15 cm (6˝) square sheet 617 of 0.013 cm (0.005˝) borosilicate glass is mechanically masked and metallized with three microns of aluminum by vacuum sputtering to produce approximately six thousand fuse blanks 619 (Figure 22). A second mask is applied, and the sheet is metallized with one micron of nickel-vanadium and then two microns of silver, to produce the bonding surfaces 610. A thin layer of uncured silicone elastomeric adhesive is spread over the entire surface of the sheet 617. Using a laser or other concentrated heat source, spots of the silicone 621 over the links 607 are cured. Uncured silicone adhesive is then washed from the face of the sheet 617. The glass is scored along horizontal dotted lines 623 and cracked to form 0.23 cm (0.090˝)-wide strips, each containing one hundred fuses arranged end-to-end and spaced apart about 0.008 cm (0.003˝). Because the glass may be cracked rather than sawed, production is easier, faster, and without waste. The strips are then scored between the fuses along vertical lines 625 with a diamond scribe, individual fuses are cracked off along the score lines, a silver-epoxy conductive adhesive is spotted onto the ends of the conductors 605 of the fuses, and leads 611 and 613 are connected to the ends of the conductor 605.

In use, the fuse 601 provides very low ESR. The silicone adhesive protects the link from ambient (whether ambient be atmosphere or a synthetic plastic casing) under both normal current conditions and overcurrent conditions, and, together with the precision link, provides electrical characteristics which are highly reproducible between samples and through time. The apparent reaction between the silicone adhesive and the aluminum link, and the complete dispersion of the link by the silicone, provide very high residual resistance after blow.

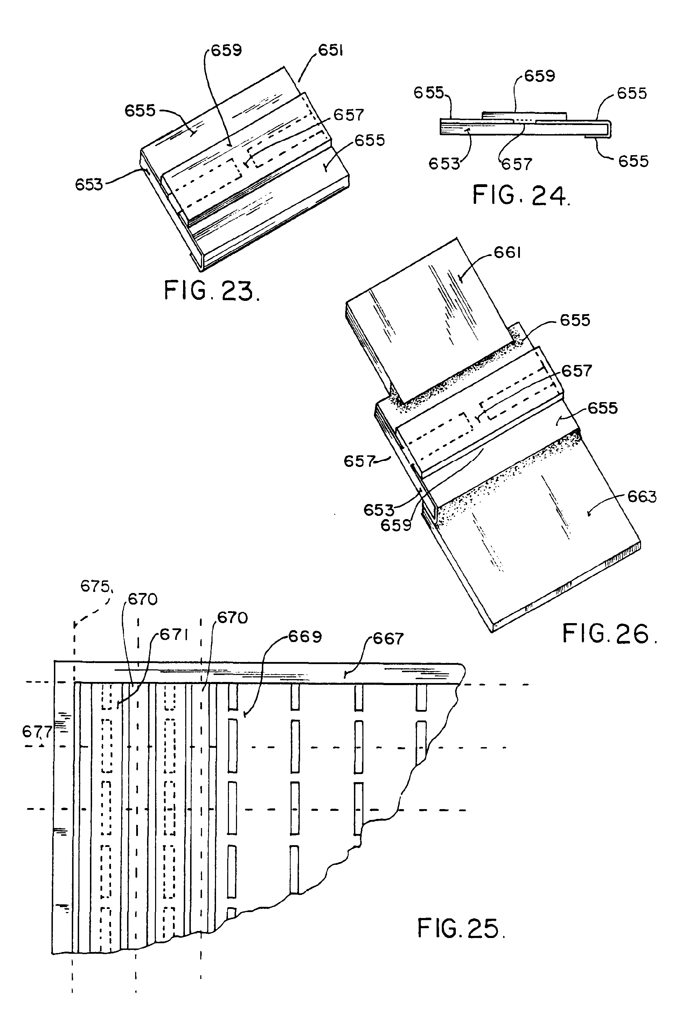

Because the fuse 601 is terminated at two ends of a single broad face of the fuse, it is more difficult to incorporate into a component than the fuse 201 or 501. A fuse 651 which is easier to incorporate into a component is shown in Figures 23-26. The fuse 651 is similar to the fuse 601, but it is manufactured and terminated somewhat differently. The fuse 651 includes a base 653, conductor 655, and fuse link 657 identical with the base 603, conductor 605, and link portion 607, respectively of the foregoing example, with the exception that one end of the conductor 655 extends around an end of the base 653, to the lower face of the base 653. A strip 659 of synthetic polymer silicone adhesive completely covers the link portion 657 and extends beyond the link 657 to cover and adhere to portions of the conductor 655 and base 653 adjacent the link 657. The adhesive 659 is illustratively Dow Corning Sylgard Q3-6605 elastomer silicone adhesive. The adhesive 659 has a thickness of approximately 0.008 cm (0.003˝). As shown in Figure 26, terminals 661 and 663 are attached to opposed ends of the conductor 655 with a silver-epoxy adhesive, with the terminal 661 attached to the upper face of the fuse 651, and the terminal 663 attached to the lower face of the fuse 651.

In the production of the fuse 651, a 15 cm (6˝) square sheet 667 of 0.013 cm (0.005˝) borosilicate glass is metallized by vacuum sputtering first with five hundred angstroms of nickel-vanadium to provide a bonding surface for the aluminum, then with three microns of aluminum. The metallized sheet is covered with a photoresist, and the pattern shown in Figure 25 is developed with a photomask and etch to produce approximately six thousand fuse blanks 669 (Figure 25). A mechanical mask is then applied, and two-micron-thick strips 670 of silver are metallized onto the aluminum. A thin layer 671 of uncured silicone elastomeric adhesive is spread in strips across the surface of the sheet 667, between the silver strips 670 and over the links 657, by a silk-screening process. The sheet 667 is baked in an oven according to the instructions of the manufacturer of the silicone adhesive to cure the adhesive layer 671. The glass is scored and cracked along vertical dotted lines 675 to form 0.15 cm (0.060˝)-wide strips, each containing about sixty fuses arranged side-to-side. The strips are stacked on edge, with their broad faces separated by metal spacer strips having a width of about 0.13 cm (0.050˝), so as to leave a 0.025 cm (0.010˝) edge of each strip exposed. The strips are then placed in a sputtering machine and a layer of nickel-vanadium and a layer of silver are sequentially deposited on the edge, extending 0.025 cm (0.010˝) over each broad face of each strip. The individual fuses are then tested after being cracked from the strip, along the horizontal dotted lines 677 of Figure 25, and each fuse is placed in a lead frame and attached to leads 661 and 663, on its upper and lower faces respectively. It will be seen that the fuse 651 may be positioned with little difficulty on the top of a component when terminal 663 is replaced by a component such as a tantalum capacitor.

Numerous variations in the electrical component of the present invention, and in the construction method of the present invention, within the scope of the appended claims will occur to those skilled in the art in light of the foregoing disclosure. In the fuse of the preferred embodiments, the geometries, sizes, and relative proportions of the inner tube, the outer sleeve, the conductor, the fusible element, and the sealant, as well as their chemical composition, may be changed to suit the application.

The characteristics of the fuse of the present invention may easily be varied to meet the needs of particular applications.

For example, such operating characteristics as its resistance, particularly its high frequency ESR or impedance, may be decreased by increasing the surface area of the link and conductor. This characteristic is particularly important in radio-frequency applications.

The sensitivity of the fuse to moderate and extreme overcurrent conditions may be controlled by controlling the variables which are known to change the sensitivity of the fuse to blow with a given current passing through the link. The most obvious, and easiest to control, is the cross-section of the link. For a given cross-section, the sensitivity of the fuse depends on the melting point of the link material, the heat sinking and thermal conductivity of the materials in the area of the link and in the fuse package itself, and the extent and distribution of the surface area of the link. A large surface area in contact with a good heat sink may reduce the sensitivity of the fuse.

To eliminate as much resistance in the wide portions 255 as possible, so that current needed to blow the fuse is concentrated in the link area 211, it may be desirable to sputter deposit the link portions as a narrow continuous strip in a first step, then deposit the wide portions as discrete pads in a second step. Although this approach requires two masks and two sputtering steps, it permits the link portion to be thinner than, or of a different composition from, the wide portions of the conductor.

The tube and sleeve may be made of ceramic. The tube may have a very thin wall on the order of 0.005 cm (0.002˝) thick, and the hollow tube may be left unsupported inside, so that the reaction of the link with the filler blows a hole in the tube, to provide an even more complete break in the conductor. Because the present design does not require a tight fit between the inner tube and its sleeve, the tube may be made in different shapes.

The fusible element of the conductor may be covered with a material with which it reacts at elevated temperatures, such as antimony pentoxide over the preferred aluminum link. The link may be formed of a different conductive material, such as a zinc/aluminum alloy which has a lower melting point, to lower the current at which it blows. The link may be made thicker or broader to carry more current without opening, or it may be made still thinner to carry less current.

The solid sealant between the inner tube and its sleeve may be made of different materials, so long as they meet the other criteria for the product and the method of making it. For example, for some of the methods of the invention, it is important that the sealant support the glass during cutting; this requires a relatively rigid material. For some purposes, a softer, less thermally conductive material may be desirable and usable. For other aspects of the methods of the invention, it is important that the sealant have no passages through it and that it adhere sufficiently to the tube and sleeve to prevent metal from forming a bridge through the fuse during sputtering of the terminals. For other aspects of the operation of the fuse, the sealant should react with the fuse link at elevated temperatures in order to chemically augment the blowing of the fuse link and disperse the link material. For this purpose, for example, a fuse link of tungsten, with a fill of silver chloride provides a highly desirable fuse. The silver chloride may be etched back with sodium thiosulfate ("hypo"). That design, however, permits the link to reestablish itself with time and an applied voltage, and its reestablishment may not be desirable in many applications.

The embodiment of the component having only a curable jacket, without a separate glass sleeve, in particular, may be made by other methods, although the preferred method has many advantages. For example, extrusion or dipping may be utilized to cover at least a portion of the conductor; in the fuse embodiment, the link is the critical portion to cover. The portion of the conductor at the end of the tube may be exposed by masking, photoresist, or other methods.

The term "metallizing" is used broadly to indicate any method of adhering a thin, flat conductor to the dielectric tube.

The electrical component is preferably a fuse, but may be another electrical component. The configuration of the component provides a good contact with the internal conductor and a component of a shape and sturdiness which make handling it easy to automate. If desired, the metallized termination may be provided at only one end of the tube and sleeve, and another treatment provided at the other. The method of making the preferred fuse is also usable in making other components.

In the embodiment of the fuse formed on a flat glass sheet, the adhesive may be spotted onto the link portions individually, using standard adhesive applicators. Cover glass may be applied to the fuses before or after the cracking operation, if desired.

These variations are merely illustrative.

## Claims

1. An electrical component (201;501;601;651) comprising a dielectric substrate (205;251;451;551;603), at least one electrical conductor (207;407;507;605;655) metallized on an outer surface of the substrate, the conductor (207;407;507;605;655) extending to an edge of the substrate, and a dielectric cover (203;231;531;609) over the substrate,
characterized by a solid filler (212;512;609;659) between the substrate (205;251;451;551;603) and the cover (203;231;531;609), the solid filler (212;512;609;659) exposing a small portion of a surface of the conductor (207;407;507;605;655) adjacent the edge of the substrate (205;251;451;551;603), and metallizing (216;610) on the edge of the substrate, the metallizing (216;610) extending around the edge of the substrate (205;251;451;551;603) and over the exposed surface of the conductor (207;407;507;605;655).

2. The component of claim 1, characterized in that the component is an electric fuse (201;501; 601;651), the conductor including a fusible link (211;411;411a;511;607;657).

3. The component of claim 2, characterized by a dielectric synthetic polymer adhesive (212;512;609;659) over the link (211;411;511;607;657), the adhesive (212;512;609;659) bonding to the link and to the substrate.

4. The component of claim 3, characterized in that the conductor (207;407;507;605;655) includes end portions, the fusible link (211;411;511;607;657) differing from the end portions in at least one of cross-sectional area and composition, the dielectric adhesive (212;512;609;659) covering the link (211;411;511;607;657) and at least a part of the end portions of the conductor (207;407;507;605;655) and isolating the link (211;411;511;607;657) from ambient, the ahesive (212;512;609;659) reacting with the link (211;411;511;607;657) when the link is exposed to overcurrent conditions and producing a permanently open link, the adhesive (212;512;609;659) maintaining isolation of the link area from ambient when the link (211;411;511;607;657) is exposed to overcurrent conditions.

5. The component of claim 3 or 4, characterized in that the adhesive (212;512;609;659) is a silicone elastomer.

6. The component of any of claims 3-5, characterized in that the link (211;411;511;607;657) is formed of a material selected from the group consisting of aluminum and aluminum alloys.

7. The component of any of claims 3-6, characterized in that the dielectric adhesive (212;512;609;659) is thickest above the center of the link (211;411;511;607;657).

8. The component of any of claims 3-7, characterized in that the substrate is a tube (205), the cover (203) being a sleeve (203) surrounding the tube, the dielectric adhesive (212) comprising a filler means (212) between the tube (205) and the sleeve (203) for providing a barrier between axial ends of the fuse (201).

9. The component of any of claims 1-8, characterized in that the component (201) is smaller than 3 mm in at least two dimensions.

10. The component of any of claims 1-9, characterized in that the substrate (205;251;451;551;603) is made of glass.

11. The component of any of claims 1-10, characterized in that the substrate is a tube (205).

12. The component of claim 11, characterized in that the component has a diameter less than 3 mm and a length substantially less than its diameter.

13. The component of any of claims 1-10, characterized in that the substrate (603) is a plate having a thickness much less than either its length or breadth.

14. The component of any of claims 1-13, characterized in that the metallizing (216) covers at least one end of the substrate (205;251;451;551;603) and at least one end of the filler (212;512;609;659).

15. The component of claims 14, characterized in that the metallizing (216) also covers at least one end of the cover (203;231;531;609).

16. The combination of an electric component (301; 311) having a plurality of leads, and a fuse interposed in at least one of the leads, characterized in comprising a fuse (201;501;601;651) in accordance with any of claims 2-8.

17. The combination of claim 16, characterized in that the component (301;311) is an electrolytic capacitor (301;311).

18. The combination of claim 16 or 17, characterized in that the component (301;311) has a dielectric housing, the housing having an interior and an exterior, and leads extending from the interior to the exterior of the housing, the fuse (201) being mounted in or on the housing.

19. A method of making an electrical component (201;501;601;651) comprising: metallizing a conductor (207;407;507;605;655) on a dielectric substrate (205;251;451;551;603), the conductor (207;407;507;605;655) extending to an edge of the substrate (205;251;451;551;603),
characterized by positioning a cover (203;231;531;609) spaced above the substrate (205;251;451;551;603), filling the space between the cover (203;231;531;609) and the substrate (205;251;451;551;603) with a solid material (212;512;609;659), etching the solid material (212;512;609;659) a short distance back from the edge of the substrate (205;251;451;551;603) to expose a portion of the conductor (207;407;507;605;655) on the substrate, and thereafter electrically connecting a terminal (221;521;611;655) to the portion of the conductor (207;407;507;605;655) exposed by etching.

20. The method of claim 19 wherein the dielectric substrate is a tube (251;451;551) and the cover is a dielectric sleeve (231;531), the solid material (212;512) being a curable material initially in a fluid state, characterizing by filling the space between the tube (251;451;551) and the sleeve (231;531) with the curable material (212;512), curing the material to form a rigid assembly (280;480;580) of the tube and sleeve, and cutting the assembly (280;480;580) into a plurality of components (201;501), each component including at least a metallized tube portion formed from the dielectric tube (251;451;551) and an insulative portion formed from the cured curable material (212;512).

21. The method of claim 20, characterized in including a step of mounting a plurality of sleeved tubes (280) generally parallel in a fixture (270), filling the space between the tube (205) and the sleeve (203) and the space between sleeves with the curable material (212), curing the material (212), and thereafter cutting the plurality of sleeved tubes (280) into plates (276) held together by the curable material (212).

22. The method of claim 21, characterized in that the step of etching back the solid material (212) comprises etching back the curable material on at least one side of the plate (276), to expose a portion of the conductor on each tube (205).

23. The method of claim 21 or 22, characterized in including a step of electrically testing the components while they are held in the plate (276).

24. The method of any of claims 20-23, characterized in including a step of pre-treating the interior of the sleeve (203) to reduce bonding between the sleeve (203) and the curable material (212), and further including a step of removing the sleeve (203) after the cutting step.

25. The method of any of claims 19-24, characterized in that the solid material is a dielectric adhesive (212;512) which adheres to the conductor (207;507) and to the substrate (205;551).

26. The method of claim 25, characterized in that the component (201;501;601;651) is a fuse, the conductor (207;407;507;605;655) including a fusible link (211;411,411a;511;607;657), the dielectric adhesive (212;512;621;671) adhering to the substrate and the link.

27. The method of claim 26, characterized in including a step of severing the substrate (205) to form a plurality of fuses (201), each including a conductor element (207) formed from said conductor and each including a said fusible link (211) covered with said adhesive (212).

28. The method of any of claims 19-27, characterized in that the step of metallizing a conductor (207) on the substrate (205) produces a continuous conductor in at least one dimension, and a step of severing the substrate (205) and the continuous conductor.

## Patentansprüche

1. Elektrisches Bauteil (201; 501; 601; 651) mit einem dielektrischen Substrat (205; 251; 451; 551; 603), mit wenigstens einem elektrischen Leiter (207; 407; 507; 605; 655) der auf die äussere Oberfläche des Substrates aufmetallisiert ist, wobei sich der Leiter (207; 407; 507; 605; 655) bis zu einem Rand des Substrates erstreckt und mit einer dielektrischen Deckschicht (203; 231; 531; 609) über dem Substrat,
gekennzeichnet, durch einen Füllstoff (212; 512; 609; 659) zwischen dem Substrat (205; 251; 451; 551; 603) und der Deckschicht (203; 231; 531; 609), wobei der feste Füllstoff (212, 512; 609; 659) einen kleinen Teil einer Oberfläche des Leiters (207; 407; 507; 605; 655) freigibt, der an den Rand des Substrates (205; 251; 451; 551; 603) angrenzt und mit Metallschicht (216; 610) am Rand des Substrates, wobei sich die Metallschicht (216; 610) um den Rand des Substrates (205; 251; 451; 551; 603) herum und über die freigelegte Oberfläche des Leiters (207; 407; 507; 605; 655) erstreckt.

2. Bauteil nach Anspruch 1, dadurch gekennzeichnet, dass das Bauteil eine elektrische Sicherung (201; 501; 601; 651) ist und der Leiter eine Schmelzsicherung (211; 411; 411a; 511; 607; 657) aufweist.

3. Bauteil nach Anspruch 2, gekennzeichnet durch einen dielektrischen, synthetischen, polymeren Klebstoff (212; 512; 609; 659) über der Sicherung (211; 411; 511; 607; 657), wobei der Klebstoff (212; 512; 609; 659) an der Sicherung und am Substrat haftet.

4. Bauteil nach Anspruch 3, dadurch gekennzeichnet, dass der Leiter (207; 407; 507; 605; 655) Endstücke aufweist, die schmelzbare Sicherung (211; 411; 511; 607; 657) sich von den Endstücken wenigstens durch die Querschnittsfläche oder die Zusammensetzung unterscheidet, der dielektrische Klebstoff (212; 512; 609; 659) die Sicherung (211; 411; 511; 607; 657) und wenigstens einen Teil der Endstücke des Leiters (207; 407; 507; 605; 655) überdeckt und die Sicherung (211; 411; 511; 607; 657) von der Umgebung isoliert und der Klebstoff (212; 512; 609; 659) mit der Sicherung (211; 411; 511; 607; 657) reagiert, wenn die Sicherung Überstrombedingungen ausgesetzt ist und eine dauernd geöffnete Sicherung erzeugt und der Klebstoff (212; 512; 609; 659) die Isolation der Sicherung gegenüber der Umgebung weiter aufrecht erhält, wenn die Sicherung (211; 411; 511; 607; 657) Überstrombedingungen ausgesetzt ist.

5. Bauteil nach Anspruch 3 oder 4, dadurch gekennzeichnet, dass der Klebstoff (212; 512; 609; 659) ein Silikon-Elastomer ist.

6. Bauteil nach einem der Ansprüche 3 - 5, dadurch gekennzeichnet, dass die Sicherung (211; 411; 511; 607; 657) aus einem Material besteht, das aus der Gruppe Aluminium und Aluminiumlegierungen ausgewählt ist.

7. Bauteil nach einem der Ansprüche 3 - 6, dadurch gekennzeichnet, dass der dielektrische Klebstoff (212; 512; 609; 659) über dem Zentrum des Sicherung (211; 411; 511; 607; 657) am dicksten ist.

8. Bauteil nach einem der Ansprüche 3 - 7, dadurch gekennzeichnet, dass das Substrat ein Rohr (205) ist, die Abdeckung (203) eine Umhüllung (203) ist, welche das Rohr umgibt und der dielektrische Klebstoff (212) Füllstoff (212) zwischen dem Rohr (205) und der Umhüllung (203) umfasst, um eine Barriere zwischen den axialen Enden der Sicherung (203) zu bilden.

9. Bauteil nach einem der Ansprüche 1 - 8, dadurch gekennzeichnet, dass das Bauteil (201) in mindestens zwei Dimensionen kleiner als 3 mm ist

10. Bauteil nach einem der Ansprüche 1 - 9, dadurch gekennzeichnet, dass das Substrat (205; 251; 451; 551; 603) aus Glas gemacht ist.

11. Bauteil nach einem der Ansprüche 1 bis 10, dadurch gekennzeichnet, dass das Substrat ein Rohr (205) ist.

12. Bauteil nach Anspruch 11, dadurch gekennzeichnet, dass das Bauteil einen Durchmesser von weniger als 3 mm und eine Länge hat, die wesentlich weniger als sein Druchmesser ist.

13. Bauteil nach einem der Ansprüche 1 - 10, dadurch gekennzeichnet, dass das Substrat (603) eine Platte ist, deren Dicke viel kleiner als entweder seine Länge oder Breite ist.

14. Bauteil nach einem der Ansprüche 1 - 13, dadurch gekennzeichnet, dass die Metallschicht (216) wenigstens ein Ende des Substrates (205; 251; 451; 551; 603) und wenigstens ein Ende des Füllstoffs (212; 512; 609; 659) abdeckt.

15. Bauteil nach Anspruch 14, dadurch gekennzeichnet, dass die Metallschicht (216) auch wenigstens ein Ende der Deckschicht (203; 231; 531; 609) abdeckt.

16. Kombination eines elektrischen Bauteils (301; 311) mit mehreren Anschlüssen und einer Sicherung, die an wenigstens einem der Anschlüsse zwischengeschaltet ist, gekennzeichnet durch eine Sicherung (201; 501; 601; 651) nach einem der Ansprüche 2 - 8.

17. Kombination nach Anspruch 16, dadurch gekennzeichnet, dass das Bauteil (301, 311) ein Elektrolytkondensator (301; 311) ist.

18. Kombination nach Anspruch 16 oder 17, dadurch gekennzeichnet, dass das Bauteil (301; 311) ein dielektrisches Gehäuse aufweist, das ein Inneres und ein Äusseres aufweist und Anschlüsse vom Inneren des Gehäuses aus dem Gehäuse führen, wobei die Sicherung (201) im oder auf dem Gehäuse montiert ist.

19. Verfahren zum Herstellen eines elektrischen Bauteils (201; 501; 601; 651) das umfasst: Metallisieren eines Leiters (201; 407; 507; 605; 655) auf ein Substrat (205; 251; 451; 551; 603), wobei sich der Leiter (207; 407; 507; 605; 655) bis zu einem Rand des Substrates (205; 251; 451; 551; 603) erstreckt,
gekennzeichnet durch das Aufbringen einer Deckschicht (203; 231, 531; 609) der zum Substrat (205; 251; 451; 551; 603) einen Abstand hat, Füllen des Raumes zwischen der Deckschicht (203; 231; 531; 609) und dem Substrat (205; 251; 451; 551; 603) mit einem festen Material (212; 512; 609; 659), ein kurzes Stück zurückätzen des festen Materials (212; 512; 609; 659) vom Rand des Substrates (205; 251; 451; 551; 603) um einen Teil des Leiters (207; 407; 507; 605; 655) auf dem Substrat freizulegen und nachher einen Anschluss (221; 521; 611; 655) mit dem Teil des Leiters (207; 407; 507; 605; 655) elektrisch zu verbinden, der durch Ätzen freigelegt wurde.

20. Verfahren nach Anspruch 19, bei dem das dielektrische Substrat ein Rohr (251; 451; 551) ist und die Deckschicht eine dielektrische Umhüllung (231, 531) ist, das feste Material (212; 512) ein aushärtbares Material ist, das anfänglich in flüssigem Zustand ist, gekennzeichnet durch das Füllen des Raumes zwischen dem Rohr (251; 451; 551) und der Umhüllung (231, 531) mit dem aushärtbaren Material (212; 512), Aushärten des Materials um eine starre Anordnung (280; 480; 580) zu bilden aus dem Rohr und der Umhüllung und Schneiden der Anordnung (280; 480; 580) in mehrere Bauteile (201; 501) wobei jedes Bauteil wenigstens einen metallbeschichteten Teil des Rohres enthält, der aus dem dielektrischen Rohr (251; 451; 551) gemacht ist und einem isolierenden Teil, der aus ausgehärtetem, aushärtbarem Material (212; 512) gemacht ist.

21. Verfahren nach Anspruch 20, gekennzeichnet durch einen Schritt, mehrere der umhüllten Rohre (280) im wesentlichen parallel in einer Halterung (270) zu befestigen, den Raum zwischen den Rohren mit dem aushärtbaren Material (212) zu füllen, Aushärten des Materials (212) und dann die mehreren umhüllten Rohre (280) in Platten (276) schneiden, welche durch das aushärtbare Material (212) zusammengehalten werden.

22. Verfahren nach Anspruch 21, dadurch gekennzeichnet, dass der Schritt, das feste Material (212) zurückzuätzen, das aushärtbare Material auf wenigstens einer Seite der Platte (276) zurückzuätzen umfasst, um einen Teil des Leiters auf jedem Rohr (205) freizulegen.

23. Verfahren nach Anspruch 21 oder 22, gekennzeichnet durch einen Schritt, die Bauteil zu prüfen, während sie in der Platte (276) festgehalten sind.

24. Verfahren nach einem der Ansprüche 20 - 23, gekennzeichnet durch einen Schritt bei dem das Innere der Umhüllung (203) vorbehandelt wird, um das Haften zwischen der Umhüllung (203) und dem aushärtbaren Material (212) zu vermindern und weiter mit einem Schritt, die Umhüllung (203) nach dem Schritt des Schneidens zu entfernen.

25. Verfahren nach einem der Ansprüche 19 bis 24, dadurch gekennzeichnet, dass das ausgehärtete Material ein dielektrischer Klebstoff (212; 512) ist, der am Leiter (207; 507) und am Substrat (205; 551) haftet.

26. Verfahren nach Anspruch 25, dadurch gekennzeichnet, dass das Bauteil (201; 501; 601; 651) eine Sicherung ist, der Leiter (207; 407;507; 605; 651) eine Schmelzsicherung (211; 411; 411a; 511; 607; 657) aufweist und der dielektrische Klebstoff (212; 512; 621; 671) am Substrat und an der Sicherung haftet.

27. Verfahren nach Anspruch 26, gekennzeichnet durch einen Schritt, das Substrat (205) zu schneiden um mehrere Sicherungen (201) zu machen, wobei jede ein Leiterelement (207) aufweist, das aus dem Leiter gebildet ist und jedes eine der Schmelzsicherungen (211) enthält, die mit dem Klebstoff (212) beschichtet ist.

28. Verfahren nach einem der Ansprüche 19 - 27, gekennzeichnet dadurch, dass beim Schritt des Metallisieren eines Leiters (207) auf dem Substrat (205) ein zusammenhängender Leiter in wenigstens einer Richtung entsteht und durch einen Schritt das Substrat (205) und den zusammenhängenden Leiter zu schneiden.

## Revendications

1. Un composant électrique (201;501;601;651) comprenant un substrat diélectrique (205;251;451;551;603), au moins un conducteur électrique (207;407;507;605;655) métallisé sur une surface externe du substrat, le conducteur (207;407;507;605;655) s'étendant jusqu'à un bord du substrat, et une enveloppe diélectrique (203;231;531;609), par dessus le substrat,
caractérisé par une matière de remplissage solide (212;512;609;659), entre le substrat (205;251;451;551;603) et l'enveloppe (203;231;531;609), la matière de remplissage solide (212;512;609;659) exposant une petite portion d'une surface du conducteur (207;407;507;605;655) adjacente au bord du substrat (205;251;451;551;603) et, une métallisation (216;610) sur le bord du substrat, la métallisation (216;610) s'étendant autour du bord du substrat (205;251;451;551;603) et par-dessus la surface exposée du conducteur (207;407;507;605;655).

2. Le composant de la revendication 1, caractérisé en ce que le composant est un fusible électrique (201;501;601;651), le conducteur comprenant une lame fusible (211;411;411a;511;607;657).

3. Le composant de la revendication 2, caractérisé par un adhésif polymère synthétique diélectrique (212;512;609;659), par-dessus la lame (211;411;511;607;657), l'adhésif (212;512;609;659) étant relié à la lame et au substrat.

4. Le composant de la revendication 3, caractérisé en ce que le conducteur (207;407;507;605;655) comprend des portions d'extrémité, la lame fusible (211;411;511;607;657) différant des portions d'extrémité dans au moins une des aires en coupe transversale et en composition, l'adhésif diélectrique (212;512;609;659) couvrant la lame (211;411;511;607;657) et au moins une partie des portions d'extrémité du conducteur (207;407;507;605;655) et isolant la lame (211;411;511;607;657) du milieu ambiant, l'adhésif (212;512;609;659) réagissant avec la lame (211;411;511;607;657) quand la lame est exposée à des conditions de courant de surcharge et produisant une lame grillée en permanence, l'adhésif (212;512;609;659) maintenant l'isolation de l'aire de la lame, du milieu ambiant, quand la lame (211;411;511;607;657) est exposée à des conditions de courant de surcharge.

5. Le composant de la revendication 3 ou 4, caractérisé en ce que l'adhésif (212;512;609;659) est un élastomère à silicone.

6. Le composant de l'une quelconque des revendications 3-5, caractérisé en ce que la lame (211;411;511;607;657) est formée d'une matière sélectionnée dans le groupe consistant en l'aluminium et en des alliages à base d'aluminium.

7. Le composant de l'une quelconque des revendications 3-6, caractérisé en ce que l'adhésif diélectrique (212;512;609;659) est le plus épais, au-dessus du centre de la lame (211;411;511;607;657).

8. Le composant de l'une quelconque des revendications 3-7, caractérisé en ce que le substrat est un tube (205), l'enveloppe (203) étant une gaine (203) entourant le tube, l'adhésif diélectrique (212) comprenant un moyen de matière de remplissage (212) entre le tube (205) et la gaine (203) pour fournir une barrière entre les extrémités axiales du fusible (201).

9. Le composant de l'une quelconque des revendications 1-8, caractérisé en ce que le composant (201) est plus petit que 3 mm, dans au moins deux dimensions.

10. Le composant de l'une quelconque des revendications 1-9, caractérisé en ce que le substrat (205;251;451;551;603) est fait de verre.

11. Le composant de l'une quelconque des revendications 1-10, caractérisé en ce que le substrat est un tube (205).

12. Le composant de la revendication 11, caractérisé en ce que le composant a un diamètre inférieur à 3 mm et une longueur essentiellement inférieure à son diamètre.

13. Le composant de l'une quelconque des revendications 1-10, caractérisé en ce que le substrat (603) est une plaque ayant une épaisseur très inférieure soit à sa longueur, soit à sa largeur.

14. Le composant de l'une quelconque des revendications 1-13, caractérisé en ce que la métallisation (216) recouvre au moins une extrémité du substrat (205;251;451;551;603) et au moins une extrémité de la matière de remplissage (212;512;609;659).

15. Le composant de la revendication 14, caractérisé en ce la métallisation (216) recouvre également au moins une extrémité de l'enveloppe (203;231;531;609).

16. La combinaison d'un composant électrique (301;311) ayant une pluralité de plombs et d'un fusible, interposé dans au moins un des plombs, caractérisée en ce qu'elle comprend un fusible (201;501;601;651) conformément à l'une quelconque des revendications 2-8.

17. La combinaison de la revendication 16, caractérisée en ce que le composant (301;311) est un condensateur électrolytique (301;311).

18. La combinaison de la revendication 16 ou 17, caractérisée en ce que le composant (301;311) a un logement diélectrique, le logement ayant un intérieur et un extérieur et des plombs s'étendant de l'intérieur jusqu'à l'extérieur du logement, le fusible (201) étant monté dans, ou sur, le logement.

19. Une méthode de fabrication d'un composant électrique (201;501;601;651) comprenant: la métallisation d'un conducteur (207;407;507;605;655) sur un substrat diélectrique (205;251;451;551;603), le conducteur (207;407;507;605;655) s'étendant jusqu'à un bord du substrat (205;251;451;551;603),
caractérisée par le positionnement d'une enveloppe (203;231;531;609) à l'écart, au-dessus du substrat (205;251;451;551;603), le remplissage de l'espace entre l'enveloppe (203;231;531;609) et le substrat (205;251;451;551;603) avec une matière solide (212;512;609;659), le gravage de la matière solide (212;512;609;659) en retrait, sur une courte distance, à partir du bord du substrat (205;251;451;551;603) pour exposer une portion du conducteur (207;407;507;605;655), sur le substrat et, par la suite, connecter électriquement une borne (221;521;611;655) à la portion du conducteur (207;407;507;605;655) exposée par gravage.

20. La méthode de la revendication 19, dans laquelle le substrat diélectrique est un tube (251;451;551) et l'enveloppe est une gaine diélectrique (231;531), la matière solide (212:512) étant une matière traitable initialement à l'état de fluide, caractérisée par le remplissage de l'espace entre le tube (251;451;551) et la gaine (231;531) avec la matière traitable (212;512), le traitement de la matière pour former un assemblage rigide (280;480;580) du tube et de la gaine, et le découpage de l'assemblage (280;480;580) en une pluralité de composants (201;501), chaque composant comprenant au moins une portion de tube métallisée, formée à partir du tube diélectrique (251;451;551) et une portion isolée, formée à partir de la matière traitable traitée (212;512).

21. La méthode de la revendication 20, caractérisée en ce qu'elle comprend une étape de montage d'une pluralité de tubes gainés (280) généralement parallèles, dans un support (270), de remplissage de l'espace compris entre le tube (205) et la gaine (203) et de l'espace compris entre les gaines, avec la matière traitable (212), de traitement de la matière (212) et, par la suite, de découpage d'une pluralité de tubes gainés (280), en plaques (276), maintenus ensemble par la matière traitable (212).

22. La méthode de la revendication 21, caractérisée en ce que l'étape de gravage en retrait de la matière solide (212) comprend le gravage en retrait de la matière traitable sur au moins un côté de la plaque (276), pour exposer une portion du conducteur, sur chaque tube (205).

23. La méthode de la revendication 21 ou 22, caractérisée en ce qu'elle comprend une étape de contrôler électriquement les composants, tandis qu'ils sont maintenus dans la plaque (276).

24. La méthode de l'une quelconque des revendications 20-23, caractérisée en ce qu'elle comprend une étape de pré-traitement de l'intérieur de la gaine (203) pour réduire la liaison entre la gaine (203) et la matière traitable (212) et, en outre, en ce qu'elle comprend une étape d'enlèvement de la gaine (203), après l'étape de découpage.

25. La méthode de l'une quelconque des revendications 19-24, caractérisée en ce que la matière solide est un adhésif diélectrique (212;512) qui adhère au conducteur (207;507) et au substrat (205;551).

26. La méthode de la revendication 25, caractérisée en ce que le composant (201;501;601;651) est un fusible, le conducteur (207;407;507;605;655) comprenant une lame fusible (211;411;411a;511;607;657), l'adhésif diélectrique (212;512;621;671) adhérant au substrat et à la lame.

27. La méthode de la revendication 26, caractérisée en ce qu'elle comprend une étape de découpage du substrat (205) poùr former une pluralité de fusibles (201), chacun comprenant un élément conducteur (207) formé à partir dudit conducteur et chacun comprenant une desdites lames fusibles (211) recouverte avec ledit adhésif (212).

28. La méthode de l'une quelconque des revendications 19-27, caractérisée en ce que l'étape de métallisation d'un conducteur (207), sur le substrat (205), produit un conducteur continu dans au moins une dimension et une étape de découpage du substrat (205) et du conducteur continu.
